# EUROPEAN PATENT APPLICATION

(11) **EP 2 418 729 A2**
(43) Date of publication of application: **15.02.2012**
(21) Application number: 11174680.6
(22) Date of filing: 20.07.2011
(51) Int. Cl.: H01Q 1/24, H01Q 7/08, H01Q 1/22, G06K 19/077

(54) **Communication terminal**

(30) Priority: 12.08.2010 JP 2010180924; 29.11.2010 JP 2010265215
(71) Applicant: Murata Manufacturing Co., Ltd., Kyoto-fu, Kyoto 617-8555 (JP)
(72) Inventor: Kubo, Hiroyuki, Kyoto 617-8555 (JP); Ito, Hiromitsu, Kyoto 617-8555 (JP); Yosui, Kuniaki, Kyoto 617-8555 (JP); Koyama, Hiromasa, Kyoto 617-8555 (JP)
(74) Representative: Stöckeler, Ferdinand

(57) **Abstract**

A circuit board (20) includes, as an inner layer, a ground conductor (GND) serving as a planar conductor. A feed circuit connected to an antenna coil (21) and various electronic components constituting a mobile communication terminal (201) are mounted on the front and back surfaces of the circuit board (20). The antenna coil (21) is mounted, with a first principal surface of a magnetic core (8) facing the circuit board (20). The antenna coil (21) is positioned such that a first conductor portion of a coil conductor (9) is closer to a ground conductor (GND) than a second conductor portion of the coil conductor (9) is to the ground conductor (GND). Also, the antenna coil (21) is positioned such that the first conductor portion of the coil conductor (9) is located near an end portion of a housing (200) in a longitudinal direction of the housing (200). The end portion becomes an upper end portion when the communication terminal (201) is held upright.

## Description

### BACKGROUND OF THE INVENTION

### 1. Field of the Invention

The present invention relates to communication terminals that can be used in radio frequency identification (RFID) systems that communicate with external devices via electromagnetic signals.

### 2. Description of the Related Art

In recent years, RFID systems using a high-frequency (HF) band, such as about a 13.56-MHz band, have been in widespread use. Examples of such RFID systems include FeliCa (registered trademark) and near field communication (NFC) systems. For example, Japanese Patent No. 3975918 discloses an antenna device for an RFID system.

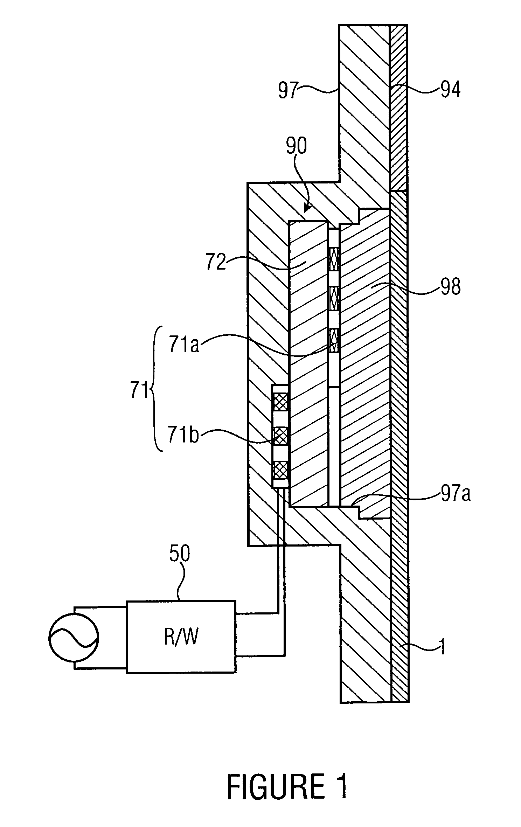

Fig. 1 is a cross-sectional view illustrating an antenna device of a communication terminal 90 disclosed in Japanese Patent No. 3975918. The antenna device includes an asymmetric coil 71 having an upper winding portion 71a larger in winding pitch and a lower winding portion 71b smaller in winding pitch. The upper winding portion 71a and the lower winding portion 71b face each other with respect to a center of the winding region of the coil 71. The upper winding portion 71a is provided with a magnetic body 72 on a side remote from an input part 94 facing an integrated circuit (IC) card 1. In other words, the lower winding portion 71b is provided with the magnetic body 72 on a side adjacent to the input part 94 facing the IC card 1. A reader/writer circuit 50 is connected to the coil 71. The antenna device is placed in a recessed portion 97a of a metal housing 97 and protected by a resin member 98. The magnetic field distribution of the antenna device is an asymmetric distribution where the magnetic field is enhanced in the upper winding portion 71a where the winding pitch and the line width of the coil 71 are large. This makes it possible to ensure good communication conditions in a direction perpendicular to a principal plane of the antenna device.

When a communication terminal is held over a communication partner, such as a reader/writer, an angle between an antenna of the communication terminal and an antenna of the communication partner is not necessarily constant. This may lead to unstable communication or communication failure, depending on the positional relationship (angular relationship) between the antennas. Such a tendency is particularly pronounced in an RFID system where communication terminals communicate with each other, as compared to an RFID system where a communication terminal (reader/writer) and an IC card (IC tag) communicate with each other.

In the communication terminal 90 disclosed in Japanese Patent No. 3975918, the antenna device is placed in the recessed portion 97a of the metal housing 97, as illustrated in Fig. 1. Therefore, when the communication terminal 90 receives a magnetic flux in a direction perpendicular to the principal plane of the antenna device, it is possible to ensure good communication conditions. However, as an angle between an antenna of the reader/writer and an antenna of the communication terminal increases and, moreover, as a distance between these antennas increases, it becomes difficult to ensure satisfactory communication characteristics.

The present invention has been made in view of the circumstances described above. An object of the present invention is to provide a communication terminal that can reduce degradation of communication performance and is capable of communicating with a communication partner over a wide angular range, regardless of the positional relationship (particularly the angular relationship) with the communication partner.

### SUMMARY OF THE INVENTION

According to an embodiment of the present application, a communication terminal includes an antenna coil composed of a magnetic core having a first principal surface and a second principal surface, and a coil conductor wound around the magnetic core; and a housing configured to house or hold the antenna coil. The coil conductor has a first conductor portion located adjacent to the first principal surface of the magnetic core, and a second conductor portion located adjacent to the second principal surface of the magnetic core and at a position different from that of the first conductor portion in plan view from the first principal surface or the second principal surface. The antenna coil is positioned such that the second principal surface of the magnetic core faces toward an outer surface of the housing (i.e., toward the communication partner).

In the communication terminal according to the embodiment, the magnetic core and the coil conductor may be configured such that a length of a portion where the second conductor portion of the coil conductor is adjacent to the magnetic core is larger than a length of a portion where the first conductor portion of the coil conductor is adjacent to the magnetic core.

In the communication terminal according to the embodiment, the magnetic core and the coil conductor may be configured such that the length of the portion where the first conductor portion of the coil conductor is adjacent to the magnetic core is smaller than a width of the first conductor portion.

In the communication terminal according to the embodiment, the antenna coil may be positioned such that the first conductor portion of the coil conductor is located near an end portion of the housing in a longitudinal direction of the housing.

In the communication terminal according to the embodiment, a circuit board having a planar conductor may be disposed within the housing, and the antenna coil may be disposed opposite the planar conductor.

In the communication terminal according to the embodiment, the magnetic core may be a mixture of magnetic powder and resin material molded into a substantially sheet-like shape, or may be a sintered magnetic body divided into a plurality of small pieces.

In the magnetic core of the communication terminal according to the embodiment, a width of a portion adjacent to the first conductor portion may be larger than a width of a portion adjacent to the second conductor portion.

In a communication terminal according to preferred embodiments of the present invention, a coil conductor of an antenna coil has a first conductor portion located adjacent to a first principal surface of a magnetic core, and a second conductor portion located adjacent to a second principal surface of the magnetic core and at a position different from that of the first conductor portion in plan view from one of the principal surfaces. The antenna coil is positioned such that the first principal surface of the magnetic core is adjacent to a planar conductor, and that the first conductor portion of the coil conductor is located near an upper end portion of a housing. Therefore, when wirelessly communicating with a communication partner, with an end portion of the housing in the longitudinal direction directed toward the communication partner, the communication terminal can communicate with the communication partner over a wide angular range without heavily depending on the positional relationship (particularly the angular relationship) with the communication partner.

Other features, elements, characteristics and advantages of the present invention will become more apparent from the following detailed description of preferred embodiments of the present invention with reference to the attached drawings.

### BRIEF DESCRIPTION OF THE DRAWINGS

Fig. 1 is a cross-sectional view illustrating an antenna device of a communication terminal disclosed in Japanese Patent No. 3975918.
Fig. 2A is a plan view of an antenna coil included in a communication terminal according to a first embodiment of the present invention, and Fig. 2B is a front view of the antenna coil.
Fig. 3 is a plan view of a state in which a flexible substrate having a coil conductor and a magnetic core are separated from each other.
Fig. 4A to Fig. 4C illustrate a configuration of an antenna device and a communication terminal including the antenna device according to the first embodiment. Fig. 4A is a plan view of the antenna device, Fig. 4B is a front view of the antenna device, and Fig. 4C is a schematic cross-sectional view of the communication terminal.
Fig. 5A and Fig. 5B schematically illustrate how a magnetic flux passes through the antenna coil when an angle θ shown in Fig. 4C is varied. Fig. 5A illustrates the case where θ is about 90°, and Fig. 5B illustrates the case where θ is about 45°.
Fig. 6A and Fig. 6B schematically illustrate how a magnetic flux passes through the antenna coil when the angle θ shown in Fig. 4C is varied. Fig. 6A illustrates the case where θ is about 0°, and Fig. 6B is a perspective view schematically illustrating how a magnetic flux behaves when θ is about 0°.
Fig. 7A is a perspective view of a state where communication terminals communicate with each other, and Fig. 7B is a cross-sectional view of Fig. 7A.
Fig. 8A is a perspective view of another state where the communication terminals communicate with each other, and Fig. 8B is a cross-sectional view of Fig. 8A.
Fig. 9A to Fig. 9D illustrate a configuration of an antenna coil according to a second embodiment of the present invention. Fig. 9A is a plan view of a flexible substrate having a coil conductor formed thereon, Fig. 9B illustrates a shape of an upper coil conductor portion of the coil conductor, Fig. 9C illustrates a shape of a lower coil conductor portion of the coil conductor, and Fig. 9D illustrates a state in which the lower coil conductor portion and the upper coil conductor portion overlap with each other.
Fig. 10A is a plan view of the antenna coil according to the second embodiment, and Fig. 10B is a front view of an antenna device including the antenna coil.
Fig. 11A is a cross-sectional view of a main part of a communication terminal according to a third embodiment of the present invention, and Fig. 11B is a front view of an antenna coil according to the third embodiment.
Fig. 12A is a plan view of an antenna coil according to a fourth embodiment of the present invention, and Fig. 12B is a front view of the antenna coil according to the fourth embodiment.
Fig. 13A is a plan view of a magnetic core included in an antenna coil according to a fifth embodiment of the present invention, and Fig. 13B is a plan view of the antenna coil according to the fifth embodiment.
Fig. 14A is a plan view of a magnetic core included in an antenna coil according to a sixth embodiment of the present invention, and Fig. 14B is a plan view of the antenna coil according to the sixth embodiment.
Fig. 15 is a cross-sectional view of a main part of a communication terminal according to a seventh embodiment of the present invention.
Fig. 16A is a perspective view of a communication terminal according to an eighth embodiment of the present invention, and Fig. 16B is a cross-sectional view of the communication terminal.
Fig. 17A is a perspective view of a communication terminal according to a ninth embodiment of the present invention, and Fig. 17B is a cross-sectional view of the communication terminal.
Fig. 18 is a cross-sectional view of a main part of a communication terminal according to a tenth embodiment of the present invention.
Fig. 19 illustrates how a coupling coefficient to a reader/writer antenna changes when a positional relationship between the magnetic core and a coil conductor is varied.
Fig. 20 is a front view of an antenna coil included in a communication terminal according to an eleventh embodiment of the present invention.
Fig. 21A to Fig. 21C are front views of antenna coils for comparison.

### DESCRIPTION OF THE PREFERRED EMBODIMENTS

### First Embodiment

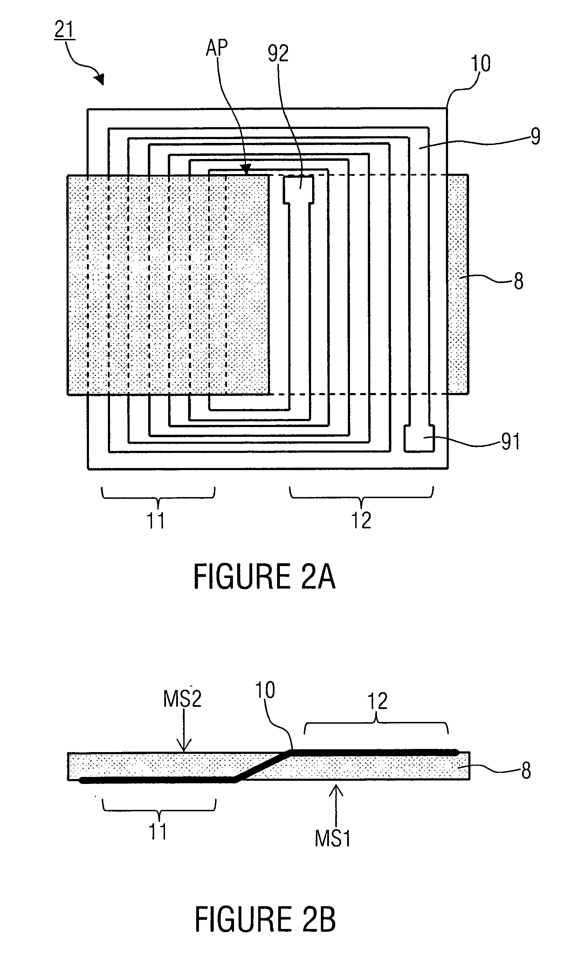

A communication terminal according to a first embodiment of the present invention is used, for example, as a mobile communication terminal, such as a cellular phone terminal. Fig. 2A and Fig. 2B illustrate an antenna coil 21 included in the communication terminal. The antenna coil 21 is used as an antenna for an RFID system using an HF band, such as about a 13.56-MHz band. Fig. 2A is a plan view of the antenna coil 21, and Fig. 2B is a front view of the antenna coil 21. The antenna coil 21 includes a magnetic core 8 having a first principal surface MS1 and a second principal surface MS2, and a coil conductor 9 wound around the magnetic core 8. The coil conductor 9 has a first conductor portion 11 located adjacent to the first principal surface MS1 of the magnetic core 8, and a second conductor portion 12 located adjacent to the second principal surface MS2 of the magnetic core 8 and at a position different from that of the first conductor portion 11 (i.e., at a position not overlapping with the first conductor portion 11) in plan view from the first principal surface MS1.

As illustrated in Fig. 2A, the magnetic core 8 is formed by molding a mixture of ferrite powder and resin material into a substantially rectangular plate-like shape. The coil conductor 9 is formed by patterning a thin film of metal, such as copper, silver, or aluminum, on a surface of the flexible substrate 10 of polyethylene terephthalate (PET) or the like into a substantially rectangular spiral shape. The coil conductor 9 has a terminal electrode 91 at one end, and a terminal electrode 92 at the other end. The terminal electrodes 91 and 92 are connected to a feed circuit (not shown).

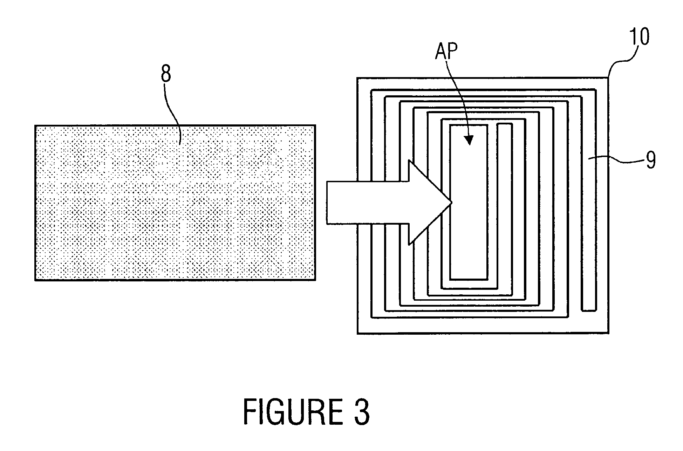

Fig. 3 is a plan view of a state in which a flexible substrate 10 having the coil conductor 9 and the magnetic core 8 are separated from each other. As illustrated in Fig. 3, the flexible substrate 10 has a substantially rectangular aperture AP at a position corresponding to a winding center of the coil conductor 9. The magnetic core 8 is inserted into the aperture AP. Thus, the coil conductor 9 has the first conductor portion 11 adjacent to the first principal surface MS1 of the magnetic core 8, and the second conductor portion 12 adjacent to the second principal surface MS2 of the magnetic core 8. The magnetic core 8 and the coil conductor 9 constitute the antenna coil 21.

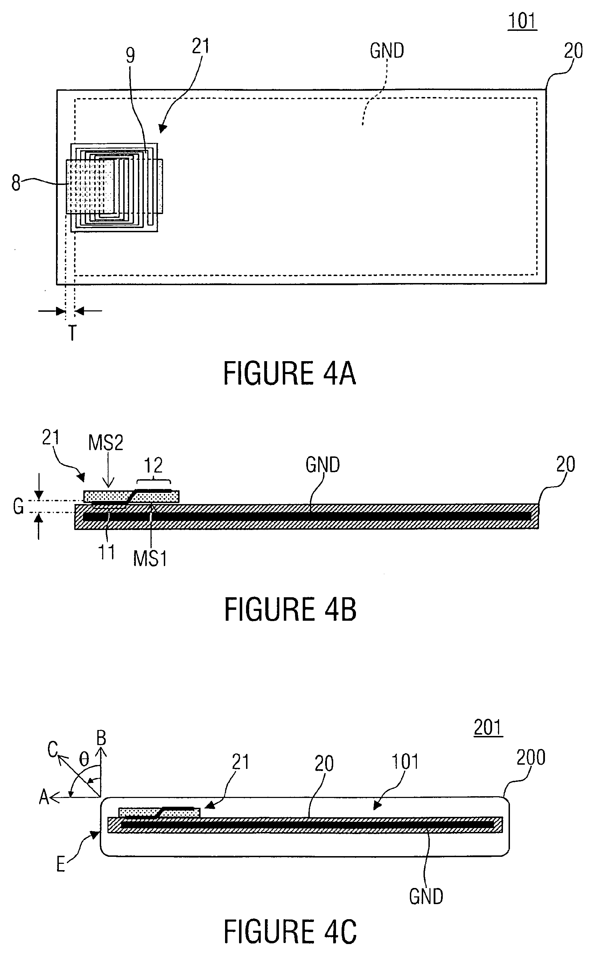

Fig. 4A to Fig. 4C illustrate a configuration of an antenna device 101 and a communication terminal 201 including the antenna device 101 according to the first embodiment. Fig. 4A is a plan view of the antenna device 101, Fig. 4B is a front view of the antenna device 101, and Fig. 4C is a schematic cross-sectional view of the communication terminal 201.

A circuit board 20 illustrated in Fig. 4A is formed of thermosetting resin, such as epoxy resin. As an inner layer, the circuit board 20 includes a ground conductor GND serving as a planar conductor. Although not shown, the feed circuit connected to the antenna coil 21 and various electronic components constituting the communication terminal 201 are mounted on the front and back surfaces of the circuit board 20.

As illustrated in Fig. 4B, the antenna coil 21 is mounted on the circuit board 20 with a bonding member interposed therebetween, with the first principal surface MS1 of the magnetic core 8 facing the circuit board 20. Therefore, the first principal surface MS1 of the magnetic core 8 faces the ground conductor GND. That is, the antenna coil 21 is positioned such that it overlaps with the ground conductor GND in plan view from the first principal surface MS1 or the second principal surface MS2 of the magnetic core 8. As illustrated in Fig. 4B, however, the coil conductor 9 and the ground conductor GND are spaced from each other by a distance G. Since the circuit board 20 having the ground conductor GND as an inner layer is used, the distance G can be created between the coil conductor 9 and the ground conductor GND. Thus, as described below, it is possible to provide enhanced communication characteristics when an azimuth angle θ of a magnetic flux is about 0°.

The antenna coil 21 is positioned such that the first conductor portion 11 of the coil conductor 9 is closer to the ground conductor GND than the second conductor portion 12 of the coil conductor 9 is to the ground conductor GND.

At the same time, the antenna coil 21 is positioned such that the first conductor portion 11 of the coil conductor 9 is located near an end portion E (see Fig. 4C) of a housing 200 in the longitudinal direction of the housing 200. The end portion E of the housing 200 in the longitudinal direction becomes an upper end portion of the housing 200 when the communication terminal 201 is held upright.

As illustrated in Fig. 4A, the magnetic core 8 of the antenna coil 21 is configured and positioned such that, in plan view, an end portion of the magnetic core 8 protrudes from an end portion of the ground conductor GND by a distance T. For example, the distance T is about 1 mm to 5 mm (about 3 mm under normal conditions). This structure makes it easier to pick up a magnetic flux.

In the communication terminal 201, a strong magnetic field is generated at the end portion E (upper end portion) of the housing 200 in the longitudinal direction. The communication terminal 201 has good directivity over a wide angular range from a direction A to a direction B in Fig. 4C. Therefore, in wireless communication where the end portion E (upper end portion) of the housing 200 is directed toward the communication partner, the communication terminal 201 can communicate with the communication partner over a wide angular range.

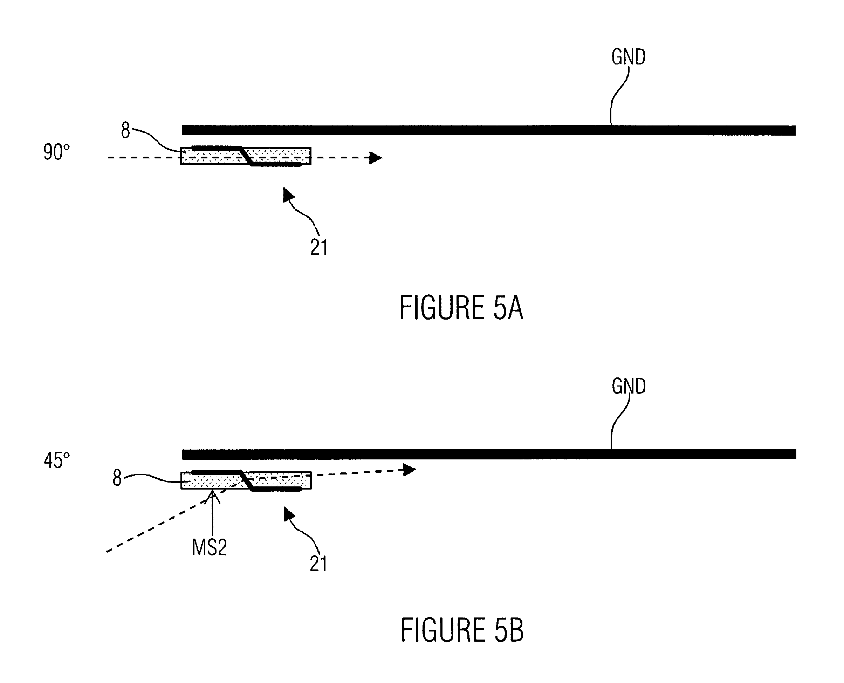

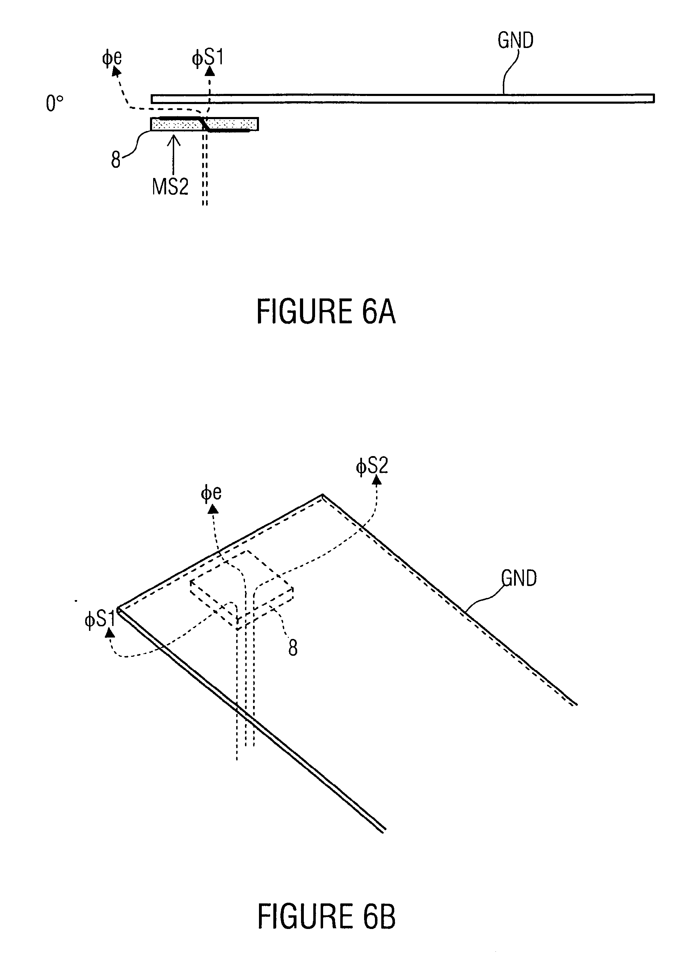

Figs. 5A and 5B and Figs. 6A and 6B schematically illustrate how a magnetic flux passes through the antenna coil 21 when the angle θ shown in Fig. 4C is varied. A magnetic flux is indicated by a broken line in Figs. 5A and 5B and Figs. 6A and 6B.

When the angle θ is about 90°, as illustrated in Fig. 5A, a magnetic flux enters the antenna coil 21 from an outer end portion of the magnetic core 8 (i.e., from a position near an end portion of the ground conductor GND) and exits the antenna coil 21 from an inner end portion of the magnetic core 8. When the angle θ is about 45°, as illustrated in Fig. 5B, a magnetic flux enters the antenna coil 21 from the outer end portion and the second principal surface MS2 of the magnetic core 8, and exits the antenna coil 21 from the inner end portion of the magnetic core 8. When the angle θ is either about 90° or about 45°, the magnetic flux passes through the winding center of the coil conductor 9.

When the angle θ is about 0°, as illustrated in Fig. 6A, a magnetic flux φe enters the antenna coil 21 from the second principal surface MS2 of the magnetic core 8 and exits the antenna coil 21 toward the outer end portion of the magnetic core 8. As illustrated in Fig. 6B, which is a perspective view, magnetic fluxes φs1 and φs2 enter the antenna coil 21 from the second principal surface MS2 of the magnetic core 8 and exit the antenna coil 21 toward sides of the ground conductor GND. Thus, when the angle θ is about 0°, as in the cases where the angle θ is about 90° and 45°, the magnetic fluxes pass through the winding center of the coil conductor 9.

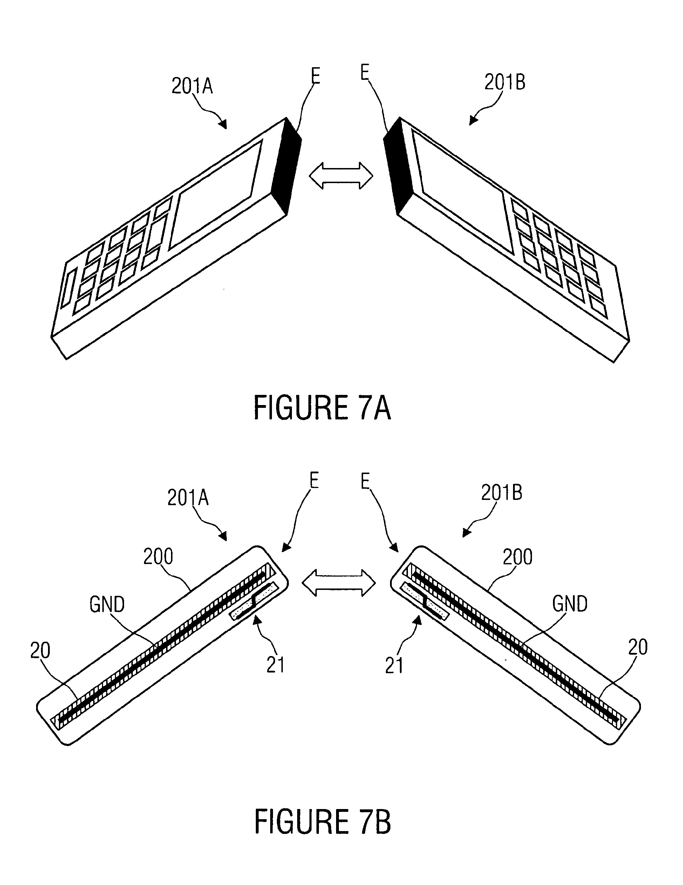

Fig. 7A is a perspective view of a state where first and second communication terminals 201A and 201B communicate with each other, and Fig. 7B is a cross-sectional view of Fig. 7A. The first communication terminal 201A and the second communication terminal 201B communicate with each other, with their upper end portions E being close to each other. In this example, if the two communication terminals 201A and 201B are mirror symmetrical, the angle of each housing 200 with respect to the mirror plane is about 45°. Each antenna coil 21 is closer to the antenna of the communication partner than the ground conductor GND is to the antenna of the communication partner.

As illustrated in Fig. 5B, the coil conductor 9 of the antenna coil 21 is interlinked with the magnetic flux that passes in the direction of about 45°. Therefore, even when the upper end portions E of the communication terminals 201A and 201B obliquely face each other as illustrated in Fig. 7A and Fig. 7B, the communication terminals 201A and 201B can wirelessly communicate with each other.

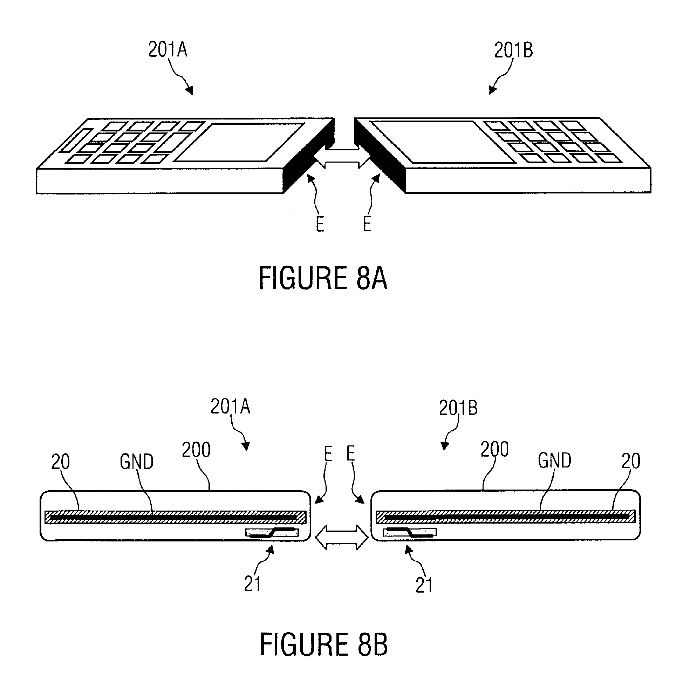

Fig. 8A is a perspective view of another state where the first and second communication terminals 201A and 201B communicate with each other, and Fig. 8B is a cross-sectional view of Fig. 8A. The first communication terminal 201A and the second communication terminal 201B communicate with each other, with their upper end portions E being close to each other. In this example, if the two communication terminals 201A and 201B are mirror symmetrical, the angle of each housing 200 with respect to the mirror plane is about 90°. In Fig. 8A, the two communication terminals 201A and 201B are depicted as if their upper end portions E face each other at an angle. However, this is for illustrative purposes only, and the upper end portions E of the communication terminals 201A and 201B actually face in parallel with each other.

As illustrated in Fig. 5A, the coil conductor 9 of the antenna coil 21 is interlinked with the magnetic flux that passes in the direction of about 90°. Therefore, even when the upper end portions E of the communication terminals 201A and 201B face each other in a straight line as illustrated in Fig. 8A and Fig. 8B, the communication terminals 201A and 201B can wirelessly communicate with each other.

As described above, communication can be performed over a wide range of angles at which one communication terminal is held over the antenna device of the communication partner.

### Second Embodiment

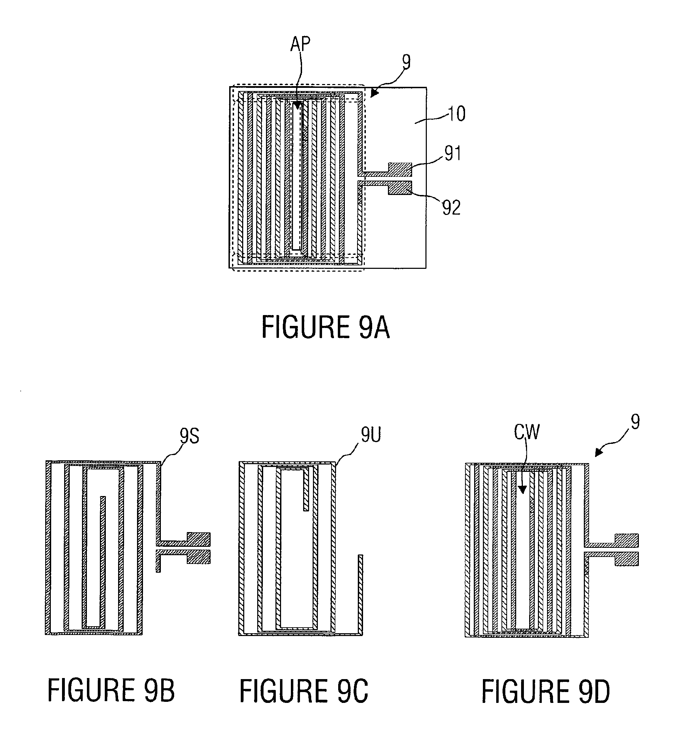

Fig. 9A to Fig. 9D illustrate a configuration of an antenna coil according to a second embodiment of the present invention.

Fig. 9A is a plan view of the flexible substrate 10 having the coil conductor 9 formed thereon. The coil conductor 9 is formed on the upper surface of the flexible substrate 10.

Fig. 9B illustrates a shape of an upper coil conductor portion 9S of the coil conductor 9. Fig. 9C illustrates a shape of a lower coil conductor portion 9U of the coil conductor 9. Fig. 9D illustrates a state in which the lower coil conductor portion 9U and the upper coil conductor portion 9S overlap with each other.

The lower coil conductor portion 9U and the upper coil conductor portion 9S have a substantially rectangular spiral shape. An insulating layer is interposed between the lower coil conductor portion 9U and the upper coil conductor portion 9S. However, an inner end portion of the lower coil conductor portion 9U and an inner end portion of the upper coil conductor portion 9S are electrically connected in series. Thus, the coil conductor 9 is formed into a substantially spiral shape around a coil conductor aperture CW.

The flexible substrate 10 is provided with the terminal electrode 91 extending continuously from an outer end portion of the upper coil conductor portion 9S, and the terminal electrode 92 electrically connected to an outer end portion of the lower coil conductor portion 9U.

The lower coil conductor portion 9U and the upper coil conductor portion 9S may be formed on the respective surfaces of the flexible substrate 10, instead of being stacked on one surface of the flexible substrate 10.

As illustrated in Fig. 9A, the flexible substrate 10 has the aperture AP at a position corresponding to the coil conductor aperture CW.

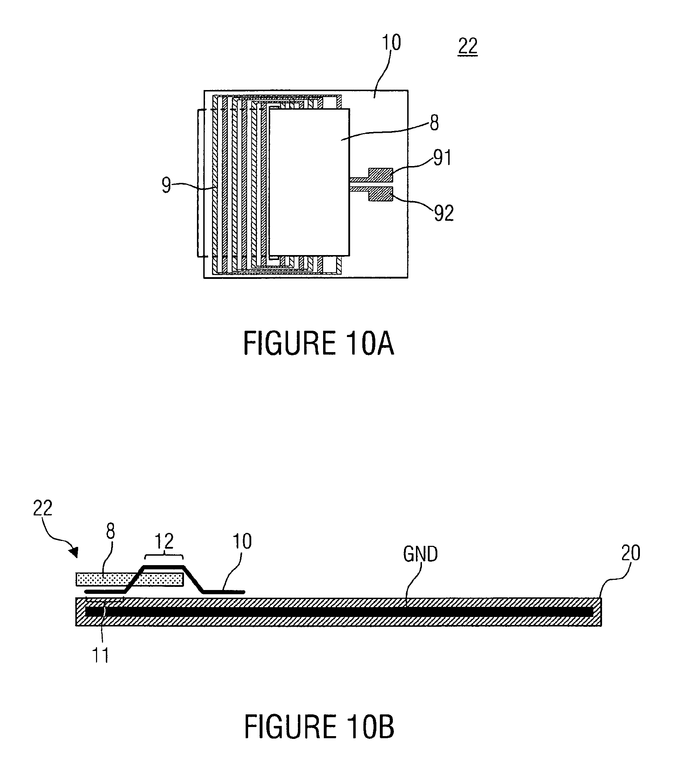

Fig. 10A is a plan view of an antenna coil 22 according to the second embodiment, and Fig. 10B is a front view of an antenna device including the antenna coil 22.

The antenna coil 22 is formed by inserting the magnetic core 8 into the aperture AP of the flexible substrate 10. The antenna device is formed by mounting the antenna coil 22 adjacent to or directly on the circuit board 20. The antenna coil 22 is positioned such that a surface where the terminal electrodes 91 and 92 (see Fig. 9A) are formed faces the circuit board 20. The terminal electrodes 91 and 92 are connected to electrodes on the circuit board 20.

The lower coil conductor portion 9U and the upper coil conductor portion 9S of the coil conductor 9 illustrated in Fig. 9A to Fig. 9D are arranged such that their main parts do not overlap with each other in plan view. Thus, it is possible to reduce stray capacitance between the lower coil conductor portion 9U and the upper coil conductor portion 9S of the coil conductor 9 and realize an antenna coil having desired characteristics.

### Third Embodiment

A third embodiment of the present invention describes an example of the positioning and electrical connection of an antenna coil within a housing of a communication terminal.

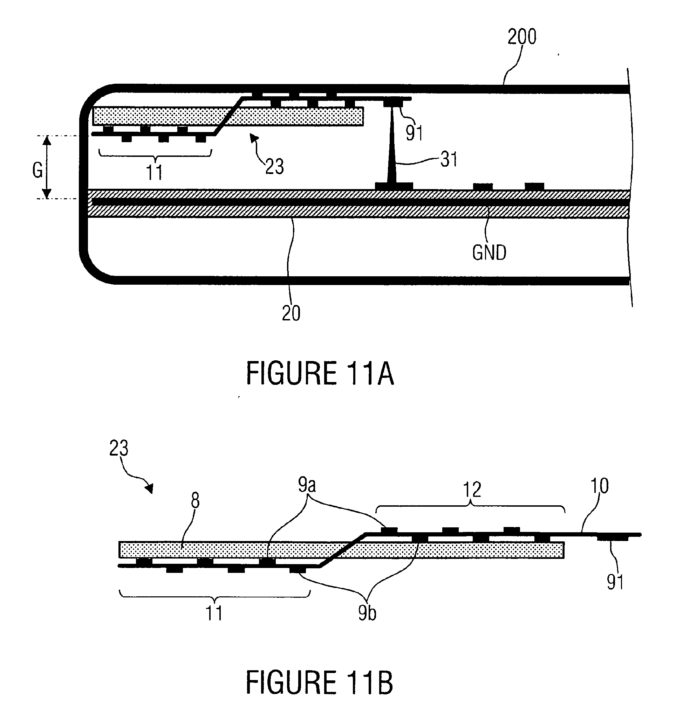

Fig. 11A is a cross-sectional view of a main part of a communication terminal according to the third embodiment. Fig. 11B is a front view of an antenna coil 23 according to the third embodiment. A coil conductor 9a and a coil conductor 9b are formed on an upper surface and a lower surface, respectively, of the flexible substrate 10. The patterns of the coil conductors 9a and 9b are the same as those illustrated in Fig. 9A to Fig. 9D in the second embodiment. In the example illustrated in Fig. 9A to Fig. 9D, two layers of coil conductors are formed on one surface of the flexible substrate 10. In the example of Fig. 11A and Fig. 11B, the coil conductors 9a and 9b are formed on the respective surfaces of the flexible substrate 10. The coil conductors 9a and 9b are connected to each other through via electrodes at predetermined points.

As illustrated in Fig. 11A, the antenna coil 23 is attached to the inner surface of the housing 200. The antenna coil 23 is positioned such that the first conductor portion 11 located near the end portion of the housing 200 in the longitudinal direction is adjacent to the circuit board 20.

The housing 200 is composed of upper and lower parts that can be separated by a plane parallel to flat surfaces of the circuit board 20. A contact pin 31 upright on the circuit board 20 is in contact with the terminal electrode 91 of the coil conductor 9b, with the upper part of the housing 200 placed over the lower part of the housing 200. Since the antenna coil 23 is attached to the upper part of the housing 200, the feed circuit on the circuit board 20 is electrically connected to the antenna coil 23. This configuration can create a large distance G between the ground conductor GND and the coil conductors 9a and 9b. Thus, it is possible to improve directivity particularly in the direction of an angle θ of about 0° as illustrated in Fig. 6A and Fig. 6B.

### Fourth Embodiment

A fourth embodiment of the present invention describes an example of positions of the terminal electrodes 91 and 92 of the coil conductor 9.

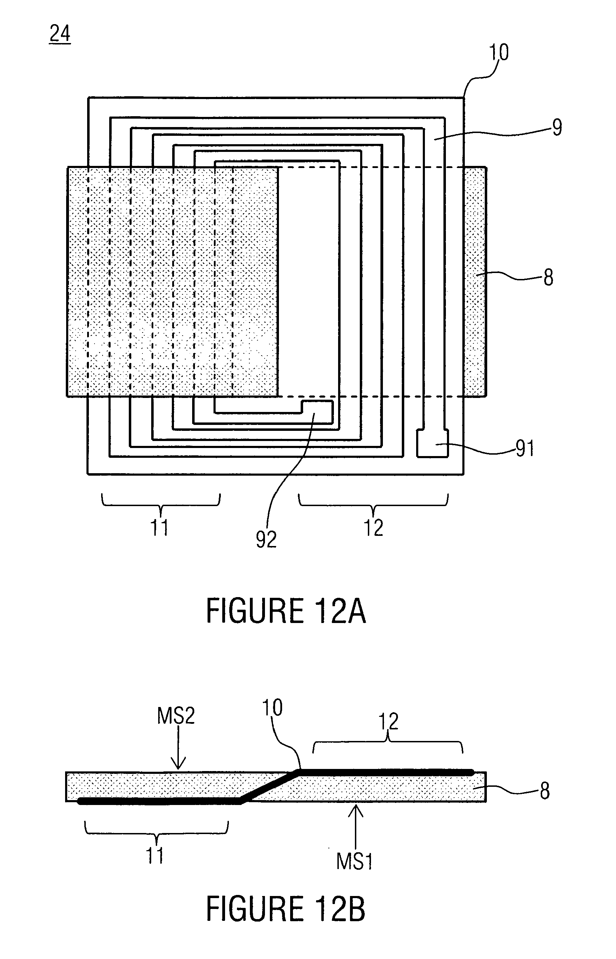

Fig. 12A is a plan view of an antenna coil 24 according to the fourth embodiment. Fig. 12B is a front view of the antenna coil 24. The antenna coil 24 is different from the antenna coil 21 illustrated in Fig. 2A and Fig. 2B in terms of the positions of the terminal electrodes 91 and 92 of the coil conductor 9. In the example of Fig. 12A and Fig. 12B, the terminal electrodes 91 and 92 serving as connecting terminals for connection to the feed circuit are positioned such that they do not overlap with the magnetic core 8 in plan view. Therefore, the presence of contact pins that are in contact with the terminal electrodes 91 and 92 has little negative impact on the transmission and formation of magnetic fluxes. It is preferable that both the terminal electrodes 91 and 92 be on one side of the magnetic core 8 in plan view (i.e., the terminal electrodes 91 and 92 are not located on opposite sides of the magnetic core 8).

### Fifth Embodiment

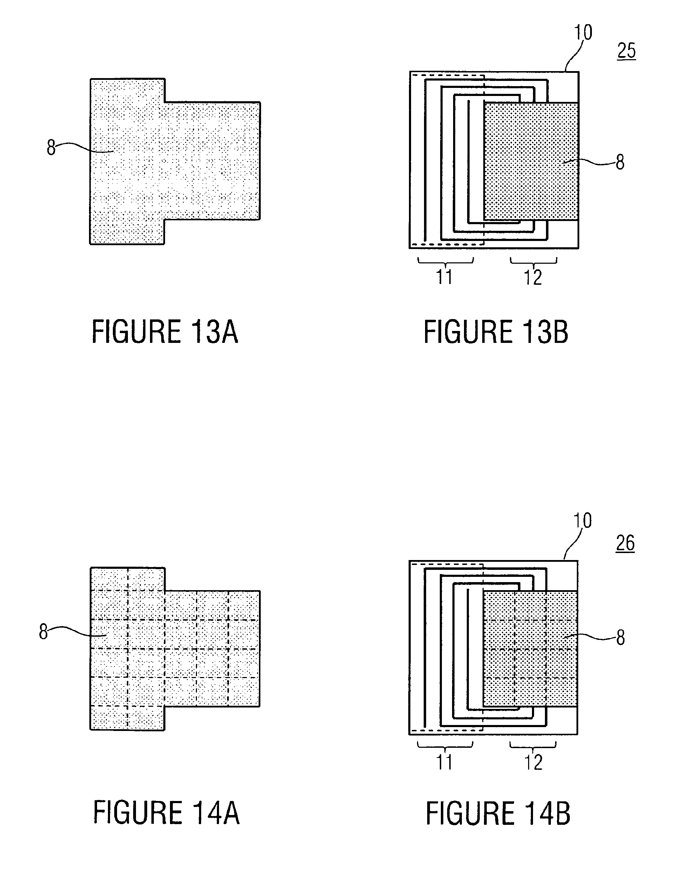

Fig. 13A is a plan view of the magnetic core 8 included in an antenna coil 25 according to a fifth embodiment of the present invention. Fig. 13B is a plan view of the antenna coil 25 according to the fifth embodiment.

The antenna coil 25 is different from the antenna coil 21 illustrated in Fig. 3 in the first embodiment in that the magnetic core 8 is wider at one end than the other.

Using the magnetic core 8 having such a shape can improve communication performance, as it is possible to strengthen the magnetic flux that passes through the magnetic core 8, enhance the coupling of magnetic field to the antenna of the communication partner, and increase the maximum communication distance. In the example of Fig. 13B, the antenna coil 25 is configured such that the wider portion of the magnetic core 8 is adjacent to the first conductor portion 11. Alternatively, the antenna coil 25 may be configured such that the wider portion of the magnetic core 8 is adjacent to the second conductor portion 12. That is, the wider portion of the magnetic core 8 may be adjacent to either the first conductor portion 11 or the second conductor portion 12. Thus, by using the magnetic core 8 having a wider portion at one end, it is possible to more effectively collect magnetic fields and improve communication performance. Also, by using the magnetic core 8 having a wider end portion adjacent to an end portion of the ground conductor GND, it is possible to reduce the magnetic resistance around the end portion of the ground conductor GND and more effectively collect magnetic fields.

In the antenna coil 25 illustrated in Fig. 13B, the wider end portion of the magnetic core 8 is substantially rectangular in shape. Alternatively, this end portion of the magnetic core 8 may have a substantially trapezoidal shape which widens toward the outside, or may have a substantially butterfly shape which widens from the center to both ends of the magnetic core 8.

### Sixth Embodiment

Fig. 14A is a plan view of the magnetic core 8 included in an antenna coil 26 according to a sixth embodiment of the present invention. Fig. 14B is a plan view of the antenna coil 26 according to the sixth embodiment. The antenna coil 26 includes the flexible substrate 10 having a coil conductor formed thereon, and the magnetic core 8 having a substantially rectangular plate-like shape. The antenna coil 26 is different from the antenna coil 25 illustrated in Fig. 13B in configuration of the magnetic core 8.

The magnetic core 8 illustrated in Fig. 14A is a flat ferrite plate having a grid of cut lines, laminated with films on both sides, and divided into small pieces by the cut lines. In Fig. 14B, each of sections into which the magnetic core 8 is divided by broken lines represents a small piece of sintered magnetic material. This configuration provides flexibility to the magnetic core 8. Therefore, the antenna coil 26 having the magnetic core 8 can be easily placed along a surface of a support base. For example, the antenna coil 26 can be placed along an inner surface of a housing of a mobile terminal. It is thus possible to easily mount the antenna coil 26 within a housing of various shapes.

In the example of Fig. 14B, the antenna coil 26 is configured such that the wider portion of the magnetic core 8 is adjacent to the first conductor portion 11. However, as described in the fifth embodiment, the wider portion of the magnetic core 8 may be adjacent to either the first conductor portion 11 or the second conductor portion 12. Thus, by using the magnetic core 8 having a wider portion at one end, it is possible to more effectively collect magnetic fields and improve communication performance.

### Seventh Embodiment

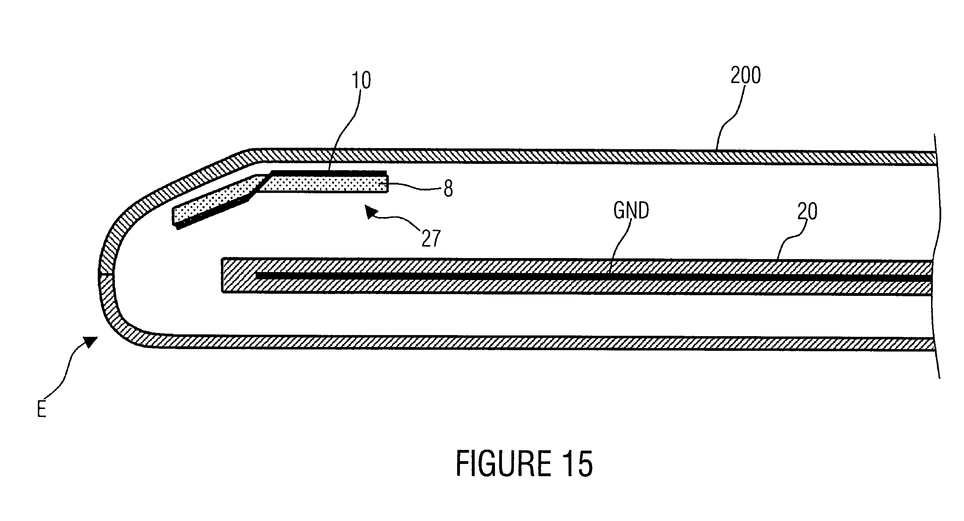

Fig. 15 is a cross-sectional view of a main part of a communication terminal according to a seventh embodiment of the present invention. In this example, an antenna coil 27 is attached to an inner curved surface of the housing 200.

The antenna coil 27 is flexible if it includes the magnetic core 8 having flexibility (as illustrated in Fig. 14A and Fig. 14B) and a flexible coil conductor formed on the flexible substrate 10. In this case, the antenna coil 27 can be placed not only on a single flat surface within the housing 200, but also along a curved surface of the housing 200. It is thus possible to easily mount the antenna coil 27 within a housing of various shapes. Moreover, when the antenna coil 27 is attached to the inner surface of the housing 200, the antenna coil 27 can be spaced apart from the ground conductor GND in the circuit board 20. Since this increases the area through which magnetic fluxes pass, it is possible to ensure good communication conditions.

### Eighth Embodiment

An eighth embodiment describes an example where the present invention is applied to a communication terminal of clamshell type.

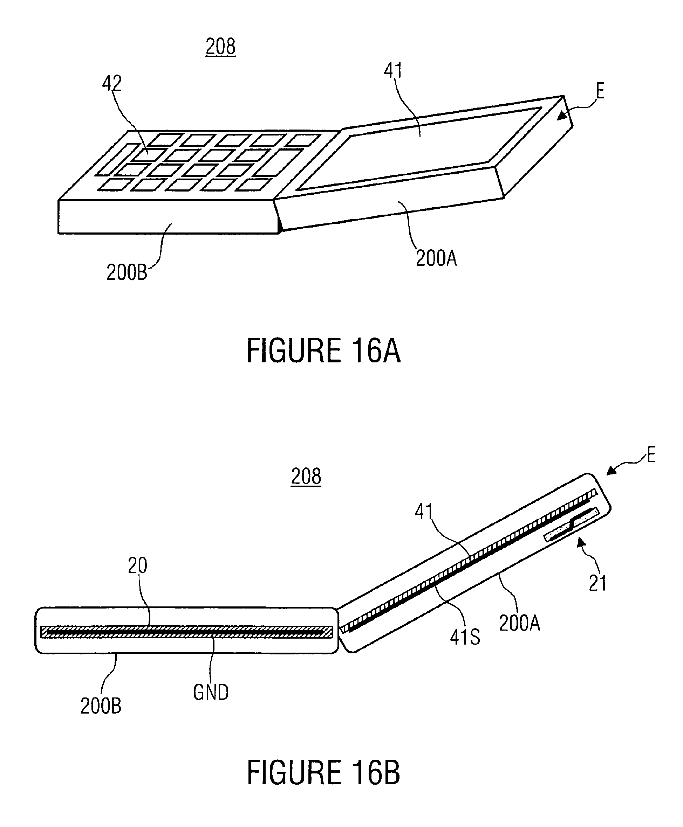

Fig. 16A is a perspective view of a communication terminal 208, and Fig. 16B is a cross-sectional view of the communication terminal 208. A housing of the communication terminal 208 is composed of a top housing portion 200A and a bottom housing portion 200B. The antenna coil 21 is disposed near an upper end portion E of the top housing portion 200A. A liquid-crystal display panel 41 is housed in the top housing portion 200A. A shield plate 41S is attached to the backside of the liquid-crystal display panel 41. The shield plate 41S corresponds to a planar conductor according to the present invention. The bottom housing portion 200B includes a key input part 42 and the circuit board 20.

When the communication terminal 208 configured as described above is folded, the antenna coil 21 is not sandwiched between the ground conductor GND in the top housing portion 200A and the shield plate 41S in the bottom housing portion 200B. Therefore, even in a folded state, the communication terminal 208 can wirelessly communicate using the antenna coil 21.

### Ninth Embodiment

A ninth embodiment describes an example where the present invention is applied to a communication terminal of slide type.

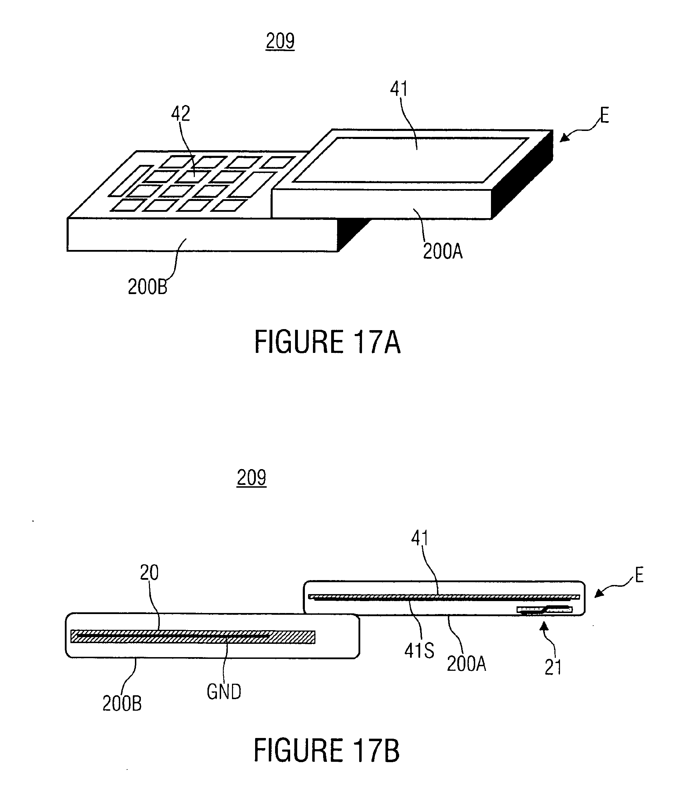

Fig. 17A is a perspective view of a communication terminal 209, and Fig. 17B is a cross-sectional view of the communication terminal 209. A housing of the communication terminal 209 is composed of the top housing portion 200A and the bottom housing portion 200B. The antenna coil 21 is disposed near the upper end portion E of the top housing portion 200A. The liquid-crystal display panel 41 is housed in the top housing portion 200A. The shield plate 41S is attached to the backside of the liquid-crystal display panel 41. The shield plate 41S corresponds to a planar conductor according to the present invention. The bottom housing portion 200B includes the key input part 42 and the circuit board 20.

The ground conductor GND in the circuit board 20 within the bottom housing portion 200B is patterned such that a region that overlaps with the antenna coil 21 when the top housing portion 200A is retracted is a non-ground region. With this structure, even when the top housing portion 200A is retracted, the communication terminal 209 can wirelessly communicate using the antenna coil 21.

### Tenth Embodiment

A tenth embodiment of the present invention describes a relationship between the coupling coefficient and the position of the magnetic core 8 with respect to the coil conductors 9a and 9b of the antenna coil 23.

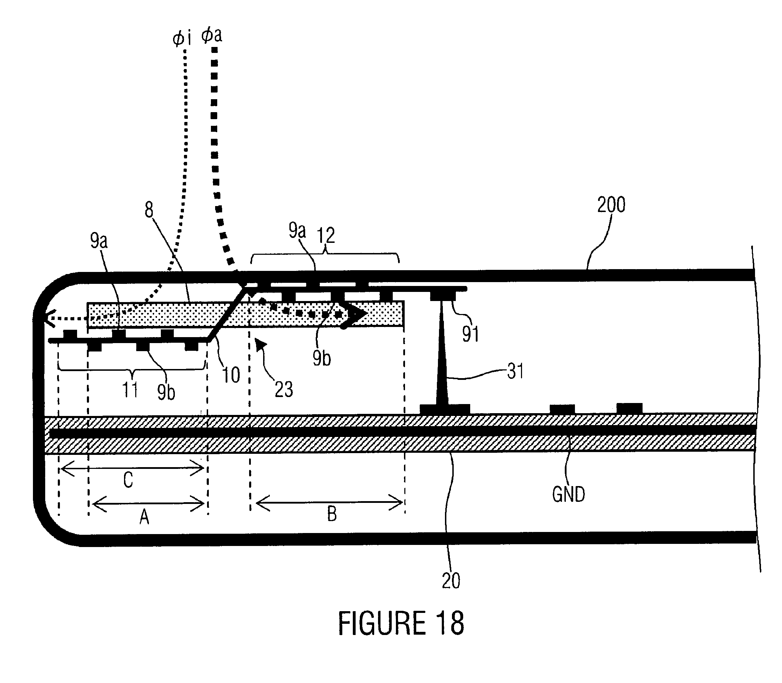

Fig. 18 is a cross-sectional view of a main part of a communication terminal according to the tenth embodiment. The coil conductor 9a and the coil conductor 9b are formed on the upper surface and the lower surface, respectively, of the flexible substrate 10.

As illustrated in Fig. 18, the antenna coil 23 is attached to the inner surface of the housing 200. The antenna coil 23 is positioned such that the second conductor portion 12 located near the end portion of the housing 200 in the longitudinal direction faces toward the outer surface of the housing 200 (i.e., toward the communication partner, or upward in Fig. 18).

The housing 200 is composed of upper and lower parts that can be separated by a plane parallel to flat surfaces of the circuit board 20. The contact pin 31 upright on the circuit board 20 is in contact with the terminal electrode 91 of the coil conductor 9b, with the upper part of the housing 200 placed over the lower part of the housing 200. Thus, the feed circuit on the circuit board 20 is electrically connected to the antenna coil 23.

The antenna coil 23 illustrated in Fig. 18 is different from that illustrated in Fig. 11A and Fig. 11B of the third embodiment, in terms of the position of the magnetic core 8 with respect to the coil conductors 9a and 9b of the antenna coil 23. In Fig. 18, the length of a portion where the first conductor portion 11 of the coil conductors 9a and 9b is adjacent to the magnetic core 8 is indicated by A, and the length of a portion where the second conductor portion 12 of the coil conductors 9a and 9b is adjacent to the magnetic core 8 is indicated by B. The antenna coil 23 illustrated in Fig. 18 is configured to satisfy the relationship A < B. At the same time, the antenna coil 23 illustrated in Fig. 18 is configured such that the length A of the portion where the first conductor portion 11 of the coil conductors 9a and 9b is adjacent to the magnetic core 8 is smaller than a width C of the first conductor portion 11.

With this configuration, an ineffective magnetic flux φi not interlinked with the antenna coil 23 is suppressed and thus, a magnetic flux φa effectively interlinked with the antenna coil 23 is enhanced. Therefore, the coupling coefficient to an antenna of the communication partner, such as a reader/writer antenna, is increased.

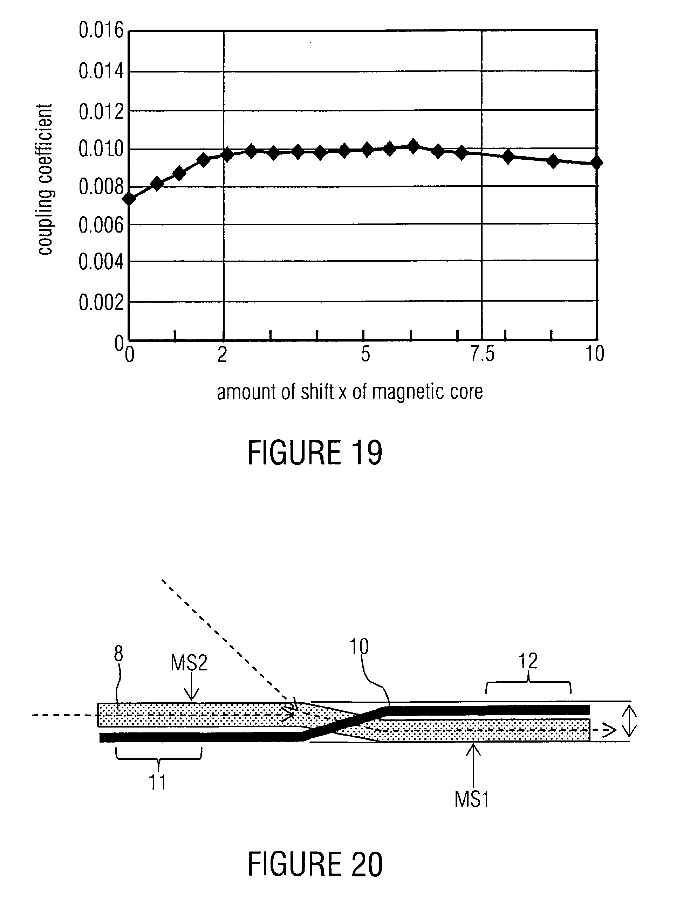

Fig. 19 illustrates how a coupling coefficient to a reader/writer antenna changes when a positional relationship between the magnetic core 8 and a coil conductor is varied. A result of the corresponding measurement was obtained under the following conditions.

### (Magnetic core 8)

Length Dimension: about 15 mm

Width Dimension: about 16 mm

### (Coil conductor)

Outer Dimensions: about 15 mm x 20 mm

Width C of first conductor portion 11: about 2 mm

Width B of second conductor portion 12: about 2 mm

### (Relationship with ground conductor)

Distance between magnetic core 8 and ground conductor GND: about 3 mm

### (Relationship with reader/writer antenna)

Distance to reader/writer antenna: about 17 mm

In Fig. 19, the "amount of shift X of magnetic core" represented by the horizontal axis is a distance obtained by subtracting the length A of the portion where the first conductor portion 11 of the coil conductor is adjacent to the magnetic core 8 from the length B of the portion where the second conductor portion 12 of the coil conductor is adjacent to the magnetic core 8.

Under the conditions described above, as shown in Fig. 19, a high coupling coefficient can be obtained when the amount of shift X of the magnetic core 8 is in the range of about 2 mm to 7.5 mm. When the amount of shift X of the magnetic core 8 is about 7.5 mm, the magnetic core 8 is adjacent only to the second conductor portion 12 of the coil conductor. Therefore, it is generally effective to define the amount of shift X of the magnetic core 8 such that it is within a range from a value above zero to a value which allows the magnetic core 8 to be adjacent only to the second conductor portion 12 of the coil conductor.

In other words, it is preferable that the relationship A < B be satisfied, where A is the length of a portion where the first conductor portion 11 of the coil conductor is adjacent to the magnetic core 8, and B is the length of a portion where the second conductor portion 12 of the coil conductor is adjacent to the magnetic core 8.

### Eleventh Embodiment

Fig. 20 is a front view of an antenna coil included in a communication terminal according to an eleventh embodiment of the present invention. The antenna coil includes the magnetic core 8 having the first principal surface MS1 and the second principal surface MS2, and the flexible substrate 10 on which a coil conductor having a substantially spiral pattern is formed. The coil conductor has the first conductor portion 11 located adjacent to the first principal surface MS1 of the magnetic core 8, and the second conductor portion 12 located adjacent to the second principal surface MS2 of the magnetic core 8 and at a position different from that of the first conductor portion 11 (i.e., at a position not overlapping with the first conductor portion 11) in plan view from the first principal surface MS1 or the second principal surface MS2.

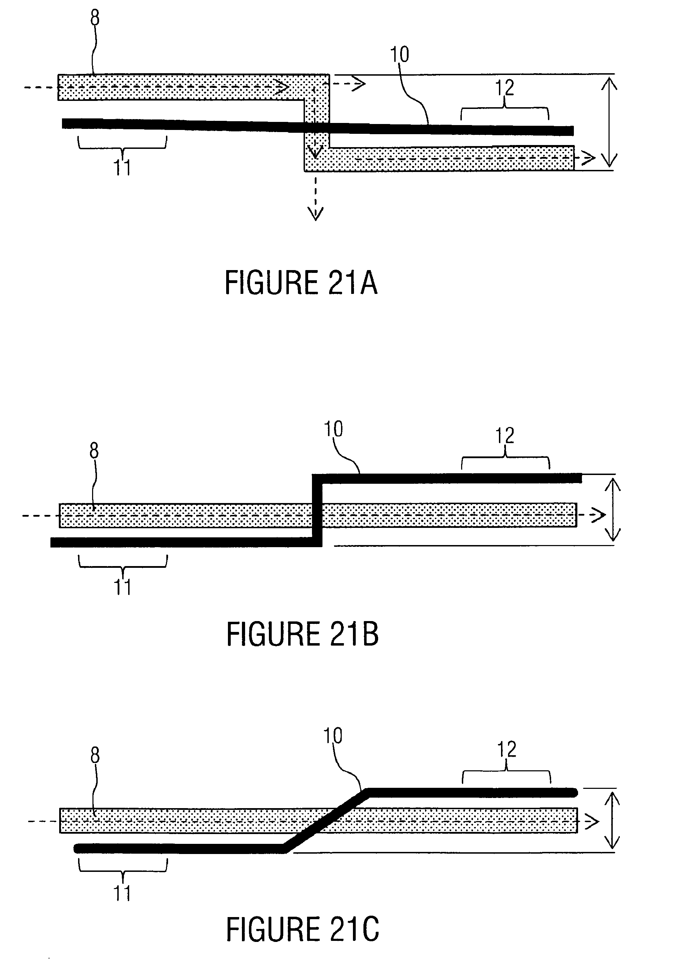

Fig. 21A to Fig. 21C are front views of antenna coils for comparison. Fig. 21A illustrates an antenna coil including the magnetic core 8 which is bent in a step-like shape, and the flexible substrate 10 which is flat. Fig. 21B illustrates an antenna coil including the magnetic core 8 which is flat, and the flexible substrate 10 which is bent in a step-like shape. Fig. 21C illustrates an antenna coil including the magnetic core 8 which is flat, and the flexible substrate 10 which is bent in a slope-like shape.

In the structure of Fig. 21A where the magnetic core 8 is bent in a step-like shape, there is a large amount of leakage flux as indicated by broken arrows which represent magnetic fluxes. Therefore, the density of magnetic fluxes effectively interlinked with the coil conductor of the antenna coil is low. Moreover, the overall thickness of the antenna coil is large. In the structure of Fig. 21B, the coupling coefficient to a magnetic flux that passes in the planar direction of the magnetic core 8 is high. However, since the coil conductor is bent to an acute angle, the overall length of the coil conductor is large, the resistance value is high, and the Q value is low. In the structure of Fig. 21C, the overall length of the coil conductor is smaller than that in the structure of Fig. 21B. However, in the structure of Fig. 21C, the resistance value is higher and the Q value is lower than those in the structure of Fig. 21B.

In contrast, in the antenna coil illustrated in Fig. 20 where the magnetic core 8 is not bent to an acute angle, the amount of leakage flux is small and it is possible to guide an effective magnetic flux. Additionally, the overall length of the coil conductor is small and the resistance value is low. Moreover, since the magnetic core 8 intersects with the aperture area of the coil conductor at an angle close to 90°, a high level of efficiency can be achieved. That is, since the magnetic flux is interlinked with the aperture area of the coil at an angle close to 90°, the effective aperture area can be increased and it is possible to generate a large electromotive force.

With the antenna coil illustrated in Fig. 20, a high gain can be obtained over a wide range of angles between the antenna coil and the magnetic flux. Particularly high gain characteristics can be achieved in the direction of about 45°.

### Other Embodiments

In the embodiments described above, the antenna coil is positioned to face the planar conductor. However, the planar conductor is optional. The antenna coil may be positioned not to face the planar conductor.

In the embodiments described above, the ground electrode of the circuit board or the shield plate attached to the backside of the liquid-crystal display panel has been described as an example of the planar conductor. However, a conductive film or conductive foil formed on the inner surface of the housing, or a battery pack may be treated as a planar conductor to form an antenna device. The planar conductor may not be a conductor of substantially rectangular shape, but may be of various planar shapes. The planar conductor may not be formed in a single layer, but may be formed in multiple layers. The planar conductor may be partially bent, as long as its main part is substantially planar in shape.

The present invention is similarly applicable to a communication terminal having a swivel housing.

Although a circuit board having a ground conductor as an inner layer has been described as an example in the embodiments above, the present invention is similarly applicable to a circuit board having a ground conductor on its surface.

Although the antenna coil is disposed within the housing in the embodiments described above, the antenna coil may be disposed on the outer surface of the housing (i.e., the antenna coil may be held by the outer surface of the housing). In this case, an input and output terminal of the antenna coil may be drawn into the housing.

While preferred embodiments of the invention have been described above, it is to be understood that variations and modifications will be apparent to those skilled in the art without departing from the scope and spirit of the invention. The scope of the invention, therefore, is to be determined solely by the following claims.

## Claims

1. A communication terminal comprising:
an antenna coil including a magnetic core having a first principal surface and a second principal surface, and a coil conductor wound around the magnetic core; and
a housing configured to house or hold the antenna coil,
wherein the coil conductor has a first conductor portion located adjacent to the first principal surface of the magnetic core, and a second conductor portion located adjacent to the second principal surface of the magnetic core and at a position different from that of the first conductor portion in plan view from the first principal surface or the second principal surface; and
the antenna coil is positioned such that the second principal surface of the magnetic core faces toward an outer surface of the housing.

2. The communication terminal according to Claim 1,
wherein the magnetic core and the coil conductor are configured such that a length of a portion where the second conductor portion of the coil conductor is adjacent to the magnetic core is larger than a length of a portion where the first conductor portion of the coil conductor is adjacent to the magnetic core.

3. The communication terminal according to Claim 2,
wherein the magnetic core and the coil conductor are configured such that the length of the portion where the first conductor portion of the coil conductor is adjacent to the magnetic core is smaller than a width of the first conductor portion.

4. The communication terminal according to any one of Claims 1 to 3, wherein the antenna coil is positioned such that the first conductor portion of the coil conductor is located near an end portion of the housing in a longitudinal direction of the housing.

5. The communication terminal according to any one of Claims 1 to 4, wherein a circuit board having a planar conductor is disposed within the housing, and the antenna coil is disposed opposite the planar conductor.

6. The communication terminal according to any one of Claims 1 to 5, wherein the magnetic core is a mixture of magnetic powder and resin material molded into a substantially sheet-like shape, or is a sintered magnetic body divided into a plurality of small pieces.

7. The communication terminal according to any one of Claims 1 to 6, wherein in the magnetic core, a width of a portion adjacent to the first conductor portion is larger than a width of a portion adjacent to the second conductor portion.
